# EUROPÄISCHE PATENTANMELDUNG

(11) **EP 0 809 977 A2**
(43) Veröffentlichungstag der Anmeldung: **03.12.1997**
(21) Anmeldenummer: 97104174.4
(22) Anmeldetag: 12.03.1997
(51) Int. Cl.: A61C 5/02, A61C 19/00

(54) **Spender für Markierungsscheiben**

(30) Priorität: 31.05.1996 DE 19622033
(71) Anmelder: Vereinigte Dentalwerke Antaeos Beutelrock Zipperer Zdarsky Ehrler GmbH & Co. KG, 81737 München (DE)
(72) Erfinder: Zdarsky, Constantin, West Palm Beach, Florida 33407 (US)
(74) Vertreter: WILHELMS, KILIAN & PARTNER Patentanwälte

(57) **Zusammenfassung**

Spender für Markierungsscheiben zum Begrenzen der Eindringtiefe von Zahnwurzelkanalaufbereitungsinstrumenten oder dergleichen. Der Spender besteht aus einem schachtelartigen Aufbau aus einem Boden 1 und einem Deckel 2. Der Raum zwischen dem Boden 1 und dem Deckel 2 hat wenigstens teilweise eine Höhe, die etwa gleich der Dicke der Markierungsscheiben ist. Es ist eine Führung 8 zum Vereinzeln der Markierungsscheiben und zum Anordnen einer Markierungsscheibe an einer bestimmten Stelle vorgesehen. An dieser Stelle befinden sich eine Einstichöffnung 7 im Boden 1 und eine Öffnung 6 im Deckel 2. Die Öffnung 6 im Deckel 2 ist wenigstens so groß, daß eine Markierungsscheibe 4 hindurchgeht. Der schachtelartige Aufbau aus dem Boden 1 und dem Deckel 2 ist in einer Einschubhülle 5 angeordnet, die so ausgebildet ist, daß sie im eingeschobenen Zustand des schachtelartigen Aufbaus die Öffnung 6 im Deckel 2 abdeckt.

## Beschreibung

Die Erfindung betrifft einen Spender für Markierungsscheiben zum Begrenzen der Eindringtiefe von Zahnwurzelkanalaufbereitungsinstrumenten oder dergleichen mit einem schachtelartigen Aufbau aus einem Boden und einem Deckel, wobei der Raum zwischen dem Boden und dem Deckel wenigstens teilweise eine Höhe hat, die etwa gleich der Dicke der Markierungsscheiben ist, und eine Führung zum Vereinzeln der Markierungsscheiben und zum Anordnen einer Markierungsscheibe an einer bestimmten Stelle vorgesehen ist, an welcher Stelle eine Einstichöffnung im Boden und eine Öffnung im Deckel vorgesehen sind, welche Öffnung im Deckel so groß ist, daß eine Markierungsscheibe hindurchgeht.

Ein derartiger Spender ist aus der DE 34 19 712 C2 bekannt.

Da Zahnwurzelkanalaufbereitungsinstrumente nur bis zu einer gewissen Tiefe in die Zahnwurzel eindringen dürfen, werden Markierungsscheiben, beispielsweise aus Silikon oder Gummi, als Stopper dazu benutzt, diese Tiefe am Zahnwurzelkanalaufbereitungsinstrument anzuzeigen. Zu diesem Zweck wird vor dem Einsatz eine Markierungsscheibe auf das Zahnwurzelkanalaufbereitungsinstrument aufgezogen, und zwar bis zu einer Stelle, bis zu der das Zahnwurzelkanalaufbereitungsinstrument in den Zahnkanal eindringen darf.

Der Spender der eingangs genannten Art soll das Aufziehen der Markierungsscheiben erleichtern, indem dafür gesorgt wird, daß eine Markierungsscheibe an einer bestimmten Stelle so angeordnet ist, daß sie vom Zahnwurzelkanalaufbereitungsinstrument aufgespießt werden kann und zusammen mit dem Zahnwurzelkanalaufbereitungsinstrument an der die Eindringtiefe in die Zahnwurzel anzeigenden Stelle aus dem Spender entnommen werden kann.

Zur Vereinzelung und Anordnung einer Markierungsscheibe an der Stelle, an der sie aufgespießt und entnommen werden kann, ist bei dem bekannten Spender ein Zuteiler vorgesehen, der im nicht betätigten Zustand die Öffnung im Deckel verschließt, so daß keine Markierungsscheiben herausfallen können, und im betätigten Zustand die Öffnung im Deckel freigibt und gleichzeitig dafür sorgt, daß eine Markierungsscheibe unter der Öffnung im Deckel angeordnet wird.

Ein derartiger Zuteiler stellt ein zusätzliches in seiner Formgebung relativ kompliziertes Bauteil dar, das den Aufbau des Spenders kompliziert.

Die der Erfindung zugrundeliegende Aufgabe besteht daher darin, den Spender der eingangs genannten Art so auszubilden, daß er einen einfachen Aufbau hat und in seiner Herstellung mit geringen Kosten verbunden ist.

Diese Aufgabe wird gemäß der Erfindung durch eine Einschubhülle gelöst, in die der schachtelartige Aufbau eingeschoben ist und die so ausgebildet ist, daß sie im eingeschobenen Zustand die Öffnung im Deckel abdeckt.

Bei der erfindungsgemäßen Ausbildung ist somit kein Zuteiler vorgesehen, sondern wird die Funktion der Abdeckung der Entnahmeöffnung im Deckel von einer einfachen Einschubhülle erfüllt, in die der schachtelartige Aufbau des Spenders im Zustand der Nichtbenutzung eingeschoben ist. Wenn eine Markierungsscheibe dem Spender entnommen werden soll, muß lediglich die Einschubhülle soweit zurückgeschoben werden, daß die Öffnung im Deckel freiliegt, die Entnahme der darunterliegenden Markierungsscheibe ist dann mittels eines Zahnwurzelkanalaufbereitungsinstrumentes problemlos dadurch möglich, daß mit dem Zahnwurzelkanalaufbereitungsinstrument durch die Öffnung im Deckel die Markierungsscheibe durchstoßen wird, wobei das Zahnwurzelkanalaufbereitungsinstrument durch die Einstichöffnung im Boden hindurchgehen kann.

Weitere Vorteile des erfindungsgemäßen Spenders sind darin zu sehen, daß er keine aufwendigen mechanischen Vereinzelungseinrichtungen und keine beweglichen Bauteile aufweist und leicht wiederbefüllbar ist, indem lediglich Boden und Deckel des schachtelartigen Aufbaus z.B. durch Abziehen eines diese Bauteile zusammenhaltenden Klebestreifens voneinander getrennt werden.

Besonders bevorzugte Ausgestaltungen und Weiterbildungen des erfindungsgemäßen Spenders sind Gegenstand der Ansprüche 2 bis 6.

Der schachtelartige Aufbau und der Einsatz können aus dem gleichen Material gefertigt sein, so daß der Spender sortenrein zu entsorgen bzw. wiederzuverwerten ist. Die Herstellung des erfindungsgemäßen Spenders ist sehr kostenkünstig.

Im folgenden wird anhand der zugehörigen Zeichnung ein besonders bevorzugtes Ausführungsbeispiel der Erfindung näher beschrieben. Es zeigen
Fig. 1 eine auseinandergezogene perspektivische Ansicht der einzelnen Bauteile des Ausführungsbeispiels,
Fig. 2 eine perspektivische Ansicht des Ausführungsbeispiels im zusammengesetzten Zustand bei der Entnahme einer Markierungsscheibe und
Fig. 3 in einer Teilschnittansicht des Entnahmebereiches des Ausführungsbeispiels, wie eine Markierungsscheibe mittels eines Zahnwurzelkanalaufbereitungsinstrumentes entnommen wird.

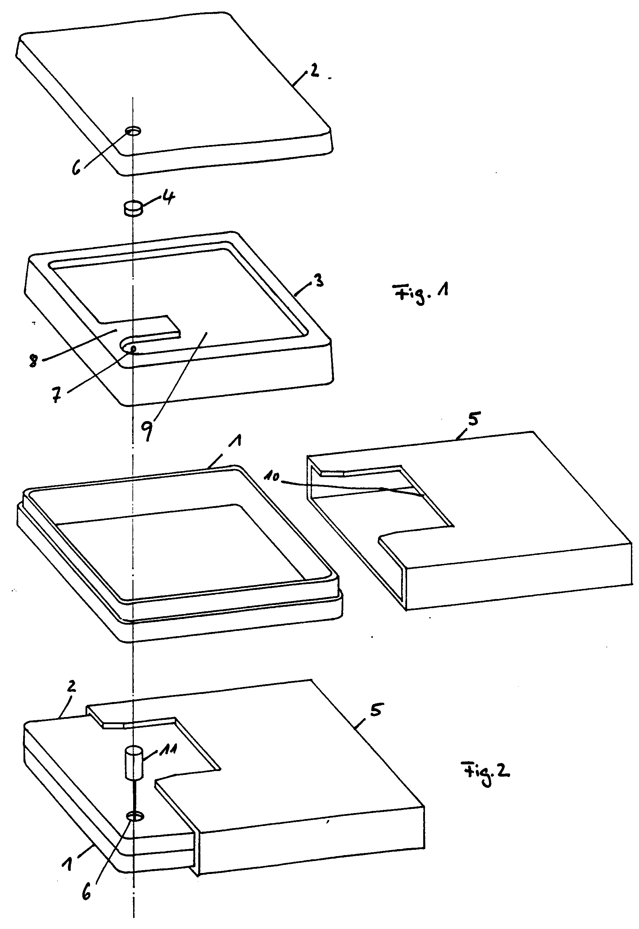

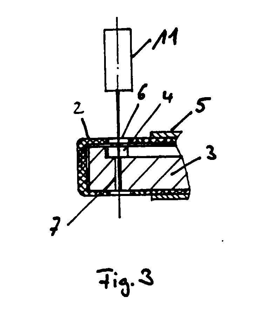

Der in Fig. 1 und 2 dargestellte Spender für Markierungsscheiben 4 zum Begrenzen der Eindringtiefe von Zahnwurzelkanalaufbereitungsinstrumenten umfaßt im wesentlichen einen Boden 1, einen Deckel 2, einen im Boden 1 angeordneten Einsatz 3 sowie eine Einschubhülle 5, in die der schachtelartige Aufbau aus dem Boden 1, dem Deckel 2 und dem Einsatz 3 eingeschoben wird, wie es insbesondere in Fig. 2 dargestellt ist.

Der Einsatz 3 ist so ausgebildet, daß seine Tiefe, d.h. der Zwischenraum zwischen seiner Bodenfläche und dem Deckel 2 an wenigstens einer Stelle 9 im wesentlichen der Dicke der Markierungsscheibe 4 entspricht. Der übrige Raum zwischen dem Einsatz 3 und dem Deckel 2 kann tiefer ausgebildet sein. Wie es in Fig. 1 dargestellt ist, ist eine Führung in Form eines Stegs 8 vorgesehen, der etwa im Abstand der Breite einer Markierungsscheibe 4 parallel zu einem Rand des Einsatzes 3 verläuft und dafür sorgt, daß die Markierungsscheiben 4 vereinzelt werden und jeweils eine Markierungsscheibe 4 an einer bestimmten Stelle im Einsatz 3 angeordnet wird, die bei dem in Fig. 1 dargestellten Ausführungsbeispiel das vordere Ende des Kanals ist, der zwischen dem Steg 8 und dem Rand des Einsatzes 3 begrenzt ist.

An dieser Stelle, an der eine einzelne Markierungsscheibe 4 angeordnet wird, ist im Einsatz 3 eine Einstichöffnung 7 vorgesehen, die so groß ist, daR ein Zahnwurzelkanalaufbereitungsinstrument hindurchgehen kann. Eine entsprechende Öffnung befindet sich im Boden 1. Im Deckel 2 ist an dieser Stelle eine Öffnung 6 vorgesehen, deren Größe wenigstens der Größe einer Markierungsscheibe 4 entspricht.

Der Einsatz 3 kann aus einer tiefgezogenen Kunststoffolie bestehen, oder aus ausgefrästem Kunststoffolienmaterial gebildet sein.

Die Einschubhülle 5 muß so ausgebildet sein, daß sie im eingeschobenen Zustand des schachtelartigen Aufbaus aus Boden 1, Deckel 2 und Einsatz 3 die Öffnung 6 im Deckel 2 abdeckt, damit keine Markierungsscheiben herausfallen können. Bei dem in Fig. 1 dargestellten Ausführungsbeispiel weist die Einschubhülle einen rechtwinkligen Ausschnitt 10 auf, der bezüglich der Längsachse asymmetrisch angeordnet ist, so daß er von Rändern unterschiedlicher Breite begrenzt wird. Der breitere Rand deckt im eingeschobenen Zustand des schachtelartigen Aufbaus aus Deckel 2, Boden 1 und Einsatz 3 die Öffnung 6 im Deckel 2 ab.

Eine Markierungsscheibe 4 wird aus dem Spender mit dem oben beschriebenen Aufbau in der Weise entnommen, die in den Fig. 2 und 3 im einzelnen dargestellt ist. Das heißt, daß dann, wenn eine Markierungsscheibe 4 entnommen werden soll, der schachtelartige Aufbau aus dem Boden 1 und dem Deckel 2 mit dem darin befindlichen Einsatz 3 wenigstens soweit aus der Einschubhülle 5 herausgeschoben wird bzw. die Einschubhülle 5 soweit zurückgeschoben wird, daß die Öffnung 6 im Deckel 2 freikommt. Aufgrund der Ausbildung der Bodenfläche des Einsatzes 3 und des Stegs 8 ist dafür gesorgt, daß sich unter dieser Öffnung 6 immer nur eine Markierungsscheibe 4 befindet. In diesem Zustand wird dann mit einem Zahnwurzelkanalaufbereitungsinstrument 11 durch die Öffnung 6, die darunter liegende Markierungsscheibe 4 sowie die Einstichöffnung 7 im Einsatz 3 und die darunter liegende Öffnung im Boden 1 eingestochen und zwar soweit, bis die Markierungsscheibe 4 zu der Stelle aufgezogen ist, die der zulässigen Eindringtiefe in die Zahnwurzel entspricht. Das Zahnwurzelkanalaufbereitungsinstrument 11 wird dann mit der aufgezogenen Markierungsscheibe 4 durch die Öffnung 6 im Deckelteil 2 herausgenommen und ist dann einsatzbereit.

Da neben dem Boden 1, dem Deckel 2 und dem Einsatz 3 auch die Einschubhülle 5 aus einem Kunststoffmaterial, beispielsweise einer Kunststoffolie, gefertigt werden kann, ergibt sich ein Aufbau, der relativ einfach und bei der Herstellung mit geringen Kosten verbunden ist. Dennoch ist sichergestellt, daß die Markierungsscheiben einzeln problemlos entnommen werden können und der Spender im Zustand der Nichtbenutzung sicher verschlossen ist.

## Patentansprüche

1. Spender für Markierungsscheiben zum Begrenzen der Eindringtiefe von Zahnwurzelkanalaufbereitungsinstrumenten oder dergleichen mit einem schachtelartigen Aufbau aus einem Boden und einem Deckel, wobei der Raum zwischen dem Boden und dem Deckel wenigstens teilweise eine Höhe hat, die etwa gleich der Dicke der Markierungsscheiben ist, und eine Führung zum Vereinzeln der Markierungsscheiben und zum Anordnen einer Markierungsscheibe an einer bestimmten Stelle vorgesehen ist, an welcher Stelle eine Einstichöffnung im Boden und eine Öffnung im Deckel vorgesehen sind, welche Öffnung im Deckel so groß ist, daß eine Markierungsscheibe hindurchgeht, gekennzeichnet durch eine Einschubhülle (5), in die der schachtelartige Aufbau (1, 2) eingeschoben ist und die so ausgebildet ist, daß sie im eingeschobenen Zustand des schachtelartigen Aufbaus (1, 2) die Öffnung (6) im Deckel (2) abdeckt.

2. Spender nach Anspruch 1, dadurch gekennzeichnet, daß an der den Deckel (2) überdeckenden Seite der Einschubhülle (5) eine Aussparung (10) vorgesehen ist.

3. Spender nach einem der vorhergehenden Ansprüche, dadurch gekennzeichnet, daß im Boden (1) ein Einsatz (3) angeordnet ist, dessen Bodenfläche zur horizontalen Ebene schräg verlaufend ausgebildet ist.

4. Spender nach Anspruch 3, gekennzeichnet durch einen erhöhten Steg (8) im Einsatz (3), der etwa im Abstand des Durchmessers der Markierungsscheiben parallel zu dem Rand des Einsatzes (3) verläuft, der den Bereich geringerer Tiefe begrenzt.

5. Spender nach Anspruch 2, dadurch gekennzeichnet, daß der Einsatz (3) aus einer tiefgezogenen Kunststoffolie besteht.

6. Spender nach Anspruch 3, dadurch gekennzeichnet, daß der Einsatz (3) aus einem ausgefrästen Kunststoffolienmaterialteil besteht.
